Europäisches Patentamt

European Patent Office

Office européen des brevets

(11) Publication number : **0 576 288 A1**

# EUROPEAN PATENT APPLICATION

(21) Application number : 93304963.7

(22) Date of filing : 24.06.93

(51) Int. Cl.$^5$ : **C08K 5/06,** C08L 25/02

(30) Priority : **25.06.92 GB 9213556**

(43) Date of publication of application :
**29.12.93 Bulletin 93/52**

(84) Designated Contracting States :
**BE DE ES FR GB IT NL SE**

(71) Applicant : **DOW BENELUX N.V.**
**P. O. Box 48**
**NL-4530 AA Terneuzen (NL)**

(72) Inventor : **Rene, Roeland Hubert**
**Liniestraat 75**
**NL-4561 ZS Terneuzen (NL)**
Inventor : **Vanharen, Jan**
**Churchilllaan 686**
**NL-4532 JB Terneuzen (NL)**
Inventor : **Theodorus, Peter Hendrikus**
**Axelsestraat 71**
**NL-4537 AD Terneuzen (NL)**
Inventor : **Van Nuffel, Claude**
**Muizelstraat 16**
**B-9041 Oostakker-Gent (BE)**

(74) Representative : **Raynor, John**
**W.H. Beck, Greener & Co 7 Stone Buildings**
**Lincoln's Inn**
**London WC2A 3SZ (GB)**

(54) **Additive for improving scratch resistance of monovinylidene aromatic monomers.**

(57)  Optionally rubber-modified styrenic polymer compositions having improved scratch resistance comprise a styrenic polymer and at least one polypropyleneglycol type material. The compositions are useful in the manufacture of molded articles.

EP 0 576 288 A1

This invention relates to optionally rubber-reinforced polymers of a monovinylidene aromatic monomer (particularly, styrene) and optionally one or more comonomers. More specifically, the invention relates to the use of an additive in order to improve the scratch resistance of such polymers.

Styrenic polymers have been used commercially for many years to produce molded consumer goods. For example, rubber-reinforced styrenic polymers, such as high impact polystyrene (HIPS), are commonly used in the production of parts of television cabinets. ABS is commonly used in the production of parts requiring higher toughness and chemical resistance. For some applications it is increasingly important to have high gloss while retaining good physical properties. Examples of glossy items injection molded from ABS include vacuum cleaner housings, telephones and small kitchen appliances. A high degree of scratch resistance is desirable in such applications since scratches tend to be more visible on such glossy items. It is known to improve the scratch resistance of styrenic polymers via the addition of compounds such as silicone oil. Examples of the use of silicon oils in this way are disclosed, for example, in DE-A-3917535, JP-2049049, EP-A-343566, JP-58132038, EP-A-44143, and many others. However, silicone oil is relatively expensive.

It would be desirable to have an additive for styrenic polymers which would impart scratch resistance to parts molded from styrenic polymers without degrading the physical properties of the parts while simultaneously preserving their visual appeal. Rubber-reinforced styrenic polymers are important commercial molding resins, and many people have proposed various solutions to the problem of scratch resistance in glossy molded parts.

DE-A-1244398 is concerned with ABS-type resins and with improving the antistatic properties of such resins. Polypropylene glycols are suggested as additives for improving the antistatic properties of such materials. No mention is made in this reference however of any effect of propylene glycols on scratch resistance.

We have now found that polyalkylene glycols, in particular polypropylene glycol, or a polyalkylene glycol containing at least 60 weight percent propylene oxide units and optionally not more than 40 weight percent (preferably not more than 20 weight percent) of ethylene oxide units, and alkyl ethers of such materials are effective as additives for improving the scratch resistance of monovinylidene aromatic polymers such as ABS and the like.

Accordingly, the present invention provides the use of a polypropylene glycol, or a polyalkylene glycol containing at least 60 weight percent propylene oxide units and optionally not more than 40 weight percent (preferably not more than 20 weight percent) of ethylene oxide units, as an additive for the purpose of improving the scratch resistance of the polymer composition, the composition comprising:

(A) a polymer matrix derived from at least one monovinylidene aromatic monomer, and optionally at least one comonomer, and optionally

(B) a rubber; wherein the said additive constitutes from 0.1 to 5 weight percent of the composition.

Surprisingly, the invention provides a cost effective solution to the problem of improving the scratch resistance of glossy parts molded from styrenic polymers without causing a deterioration in appearance or physical properties. The composition of the invention is useful for the preparation of molded and extruded articles for use in items such as vacuum cleaner housings, telephones and small kitchen appliances.

The required components of the composition of the present invention are as follows: an optionally rubber-modified styrenic polymer; and a scratch resistance enhancing agent.

The scratch resistance enhancing agent employed herein is preferably a polypropylene glycol (i.e. a polymer derived entirely from propylene oxide units), but polymers derived principally from propylene oxide units, and containing up to a maximum of 40 weight percent, preferably up to 20 weight percent, of ethylene oxide units may also be employed.

Examples of these polyalkylene glycols or alkyl ethers of these polyalkylene glycols include polymers of propylene oxide, and optionally as a comonomer ethylene oxide, initiated on water or an alkanol. These materials when prepared without using ethylene oxide commonly are called polypropylene glycols or polypropylene glycol alkyl ethers. For the ethers, lower alkyl groups having from 1 to 12 carbon atoms are preferred, with groups of from 2 to 8 carbon atoms being more preferred. The n-butyl ether is most preferred. Preferred scratch resistance additives are the polyalkylene glycols and alkyl ethers of polyalkylene glycols having average molecular weights of from 500 to 10,000, more preferably from 1,000 to 5,000.

Examples of polyalkylene glycols prepared from ethylene oxide and propylene oxide include DOWFAX 63N40, DOWFAX 63N30 and DOWFAX 92N20, all of which are commercially available from The Dow Chemical Company. The polypropylene glycols and their esters are preferred. SYNALOX 100-150B and POLYGLYCOL P4000, both of which are available commercially from The Dow Chemical Company, are examples of preferred scratch resistance additives.

The additive is employed in an amount which improves the scratch resistance of the substrate composition. Preferably, from 0.1 to 5 weight percent of additive is employed. More preferably, from 0.2 to 4 weight percent of additive is employed, and most preferably from 0.5 to 2.5 percent is employed. Mixtures of additives can be

2

employed.

The styrenic polymers of the present invention are prepared from one or more monoalkenyl aromatic compounds. Representative monoalkenyl aromatic compounds include styrene, alkyl substituted styrenes such as alpha-alkyl-styrenes (e.g., alpha-methyl-styrene and alpha-ethyl-styrene) and ring substituted styrenes (e.g., o-ethyl-styrene, 2,4-dimethyl-styrene, and vinyltoluene, particularly, p-vinyl-toluene); ring substituted halostyrenes such as chloro-styrene, 2,4-dichloro-styrene and the like; and styrene substituted with both a halo and alkyl group such as 2-chloro-4-methylstyrene; vinyl anthracene; and mixtures thereof. In general, the polymer matrix preferably utilizes styrene and/or alpha-methyl-styrene as the monoalkenyl aromatic monomer, with styrene being the most preferred monoalkenyl aromatic compound. In addition to the monoalkenyl aromatic monomer, one or more additional comonomers, preferably in an amount of up to 40% by weight of the polymerizable monomer mixture optionally may be employed. Suitable comonomers include, for example, unsaturated nitriles, for example acrylonitrile; alkyl acrylates and alkyl methacrylates, for example methyl methacrylate or n-butylacrylate; ethylenically unsaturated carboxylic acid monomers; and ethylenically unsaturated carboxylic acid derivative monomers including anhydrides and imides such as maleic anhydride and N-phenyl maleimide. Acrylonitrile is the preferred comonomer. The styrenic polymer is the major component of the composition of the invention.

The styrenic polymer employed optionally can be rubber-modified. Diene-containing rubbery polymers are preferred as the rubber. The diene-containing rubbery polymer preferably employed is a rubbery polymer having at least one diene-containing block. Preferably, said polymer is a homopolymer or copolymer of an alkadiene. Advantageously, the rubber is a homopolymer of a 1,3-conjugated diene such as butadiene, isoprene, piperylene, chloroprene and the like, or a copolymer, such as, e.g., a block copolymer, of said conjugated dienes with one or more compounds such as, for example, the monoalkenyl aromatic compounds, such as styrene; alpha, beta-ethylenically unsaturated nitriles such as acrylonitrile; alpha-olefins such as ethylene and propylene; and the like. The diene-containing rubbery polymer is advantageously employed in amounts such that the rubber-reinforced polymer product contains from about 5 to about 40%, generally from 5 to 25%, preferably from about 8 to about 20%, more preferably from about 12 to about 16 weight percent rubber (expressed as rubber or rubber equivalent). The diene-containing rubbery polymer can be a thermoplastic elastomeric block copolymer compatible with the styrenic polymer. Thermoplastic elastomeric block copolymers are well known, and several are commercially available. Additionally, the general type and preparation of some of these block copolymers are described in U.S. Patent Re. 28,246, and in many other patents. Mixtures of rubbery polymers can be employed. For example, mixtures of rubbery polymers prepared by emulsion and mass polymerization processes can be employed. The preparation of ABS using such mixtures is disclosed in U.S. Patent 4,713,420. These emulsion/mass mixtures are preferred for use in the preparation of ABS.

Although the diene-containing rubbery polymer may contain a small amount of a crosslinking agent, excessive crosslinking can result in loss of the rubbery characteristics and/or render the rubber insoluble in the monomer. The rubber preferably employed in the preparation of the disperse rubber particles exhibits a second order glass transition temperature not higher than about 0°C and preferably not higher than about -20°C.

The high impact styrenic polymer component of the present invention can be selected from a wide variety of compositions comprising a styrenic polymer and, optionally, rubber. These materials are commercially available and their composition is well known to those skilled in the art. The methods for preparing styrenic polymers are well known to those skilled in the art, and include, for example, emulsion, suspension, mass, and mass-suspension polymerization methods. A mass type polymerization is preferred when preparing polystyrene, HIPS or SAN. The techniques of mass polymerization, and the conditions needed for producing desired average rubber particle sizes are well known to those skilled in the art. In general, continuous methods are preferred for mass polymerizing the monoalkenyl aromatic compound in the reaction mixture. It is generally preferred to utilize a stratified, linear flow, stirred tower type reactor, also referred to as a plug flow type reactor when preparing polystyrene or HIPS. Such reactors are well known. See, for example U.S. Patent 2,727,884. Such a process may or may not comprise recirculation of a portion of the partially polymerized product.

A suitable initiator may be employed in the preparation of the styrenic polymer. Representative of such initiators include the peroxide initiators such as the peresters, e.g., tertiary butyl peroxybenzoate and tertiary butyl peroxyacetate, dibenzoyl peroxide, dilauroyl peroxide, 1,1-bis tertiary butyl peroxycyclohexane, 1-3-bis tertiary butyl peroxy-3,3,5-trimethyl cyclohexane, dicumyl peroxide, photochemical initiation techniques and the like. Preferred initiators include dibenzoyl peroxide, tertiary butyl peroxy benzoate, 1,1-bis tertiary butyl peroxy cyclohexane and tertiary butyl peroxy acetate. As is known in the art, initiators may be employed in a range of concentrations dependent on a variety of factors including the specific initiator employed, the desired levels of polymer grafting when rubber is employed, and the conditions at which the mass polymerization is conducted. Specifically, in the preferred mass polymerization process for preparing rubber-reinforced polymers, from about 50 to about 2000, preferably from about 100 to about 1500, weight parts of the initiator are employed per million weight parts of monomer.

In addition to the monomer, rubber and initiator, the mass polymerization mixture preferably contains a reaction diluent. Reaction diluents advantageously employed include normally liquid organic materials which form a solution with the rubber reinforcing polymer, the polymerizable monomers and the polymer prepared therefrom. Examples of such organic liquid diluents include aromatic and substituted aromatic hydrocarbons such as benzene, ethylbenzene, toluene, xylene and the like; saturated, substituted or unsubstituted, straight or branched, aliphatics having 5 or more carbon atoms, such as heptane, hexane, octane or the like; and alicyclic or substituted alicyclic hydrocarbons having 5 or 6 carbon atoms such as cyclohexane and the like. Preferred organic liquid diluents employed herein are the substituted aromatics, with ethylbenzene and xylene being most preferred. If employed, the reaction diluent is generally employed in an amount up to about 25 weight percent, preferably from about 2 to about 25 weight percent, based on the total weight of rubber, monomer and diluent.

As is conventional, the polymerization mixture used in preparing the styrenic polymer may also contain other materials such as one or more flow promoters, catalysts, lubricants, plasticizers, antioxidants (e.g., alkylated phenols such as di-_tert_-butyl-p-cresol or phosphites such as trisnonyl phenyl phosphite); polymerization aids, e.g., chain transfer agents, such as an alkyl mercaptan, such as n-dodecyl mercaptan; or mold release agents, e.g., zinc stearate. The use of a chain transfer agent is optional, and in any event, is usually employed only when larger size rubber particles (e.g. having an average particle size of at least one micrometer) are desired. If employed, the chain transfer agent is generally employed in an amount of from about 0.001 to about 0.5 weight percent based on the total weight of the polymerization mixture to which it is added.

The temperatures at which mass polymerization is most advantageously conducted are dependent on the specific components, particularly the initiator, employed, but will generally vary from about 60°C to about 190°C.

Crosslinking of the rubber in rubber-modified styrenic polymers and removal of the unreacted monomers, as well as any reaction diluent, if employed, and other volatile materials is advantageously conducted employing conventional techniques.

The polymer composition of the present invention can include commonly employed additives such as, for example, fillers, pigments, stabilizers, lubricants, mold release agents, and the like. Examples of common additives include, carbon black, polyethylene wax, glass fibers, glass beads, talc, $TiO_2$, phenolic antioxidants, mineral oil, and the like. Additionally, the rubbery polymers of the invention may be oil extended. These additives are employed in amounts which are well known to those skilled in the art.

The polymer composition of the invention suitably is prepared by batch or continuous blending of the individual components described hereinabove, with or without using a masterbatch, according to methods well known to those skilled in the art. For example, the blending can be accomplished by extrusion.

The scratch resistance enhancing agent can be incorporated into the composition of the invention as part of the reaction mixture, or by blending with the preformed styrenic polymer, or both.

When the components of the invention are employed as described hereinabove, there results a styrenic polymer composition comprising an optionally rubber-modified styrenic polymer and an effective amount of a scratch resistance enhancing agent. These compositions are useful in the preparation of molded plastic articles which, unlike previously known compositions, have an improved combination of properties, as the compositions of the invention exhibit good impact strength, high gloss, and good scratch resistance.

The following examples illustrate the invention and should not be construed to limit its scope. In the examples and comparative experiments, all parts and percentages are by weight and all temperatures are degrees Celsius unless otherwise indicated.

MAGNUM 3453 brand ABS resin (MAGNUM is a trademark of The Dow Chemical Company) available from Dow Benelux N.V. is used as the base polymer. Compositions of the invention and comparative compositions are prepared by blending the ABS with the additives identified below in a Brabender twin screw extruder to obtain a homogeneous mixture. The temperature profile for the machine was as follows: zone 1 at 200°C; zone 2 at 205°C; zone 3 at 210°C; and the die temperature was set at 220°C.

After the ingredients of the experimental compositions are mixed in the extruder, the resulting mixtures are injection molded in a Klockner Ferromatik F60 machine having the following settings. Temperature profile: nozzle at 250°C; front zone at 240°C; middle zone at 230°C; and rear zone at 220°C; and the screw speed was 100 rpm. Injection time 2 is 5 seconds, injection time 1 is 3 seconds, and the cooling time is 25 seconds. Injection pressure 2 is 45 bar, injection pressure 1 is 65 bar, and the back pressure is 20 bar, but is 15 bar when the level of scratch resistance enhancing agent is 1%. Injection speed V2 is 2, injection speed V1 is 45, and the dosing is 42.9mm. Plaques of 2 x 100 x 100 mm are molded at a mold temperature of 65°C, so that good gloss is achieved.

Following the testing of a plaque it is given a rating of from 1 to 5 depending upon the severity of the scratch.

The following procedure is used to determine the scratch resistance rating. The molded plaques are tested using a Model 435 device, available from Erichsen GMBH & Co. KG, with an applied force of 2N and a fixed testing wheel of SAN having a Rockwell M hardness of 85 to determine a scratch rating. The plaques are then shown to a panel of people who are asked to rate the materials. A surface which is barely scratched is rated 5, and a severely scratched surface is rated 1. ABS with no scratch resistance enhancing agent is included as a reference material. All members of the panel are able to identify this reference. The ratings are averaged over the panel members. This visual method is found to be reproducible.

Table 1 - Additives

| Additive | Trade name | Supplier |
|---|---|---|
| Silicone oil | DC 200 | Dow Corning Corporation |
| Polypropylene oxide butyl ether with an average molecular weight of 2,600 | SYNALOX 100-150B | Dow Benelux N.V. |
| Polypropylene glycol with an average molecular weight of 4,000 | POLYGLYCOL 4000 | Dow Benelux N.V. |

In addition to the the materials listed in Table 1, all compositions also contain a small, identical amount of color additive to make the test plaques bright red to make it easier to detect scratches.

Table 2

| Run No. | C1* | C2* | 3 | 4 | 5 | 6 |
|---|---|---|---|---|---|---|
| MAGNUM 3453 | 100 | bal. | bal. | bal. | bal. | bal. |
| SYNALOX 100-150B | 0 | 0 | 0 | 1 | 2 | 0 |
| POLYGLYCOL P4000 | 0 | 0 | 1 | 0 | 0 | 2 |
| Silicone Oil | 0 | 1 | 0 | 0 | 0 | 0 |
| Notched Izod 4mm (J/m) | 184 | 172 | 175 | 185 | 211 | 184 |
| Scratch Resistance | 1 | 2 | 4 | 4 | 5 | 5 |
| Appearance | ** | *** | ** | ** | ** | ** |

\* Comparative experiment - Not an embodiment of the invention.

\*\* Standard appearance.

\*\*\* Silicone oil did not mix well, leading to non-uniform appearance.

From Table 2 it is apparent that the additives of Runs 3-6 give the best improvement in scratch resistance.

## Claims

1. The use of a polypropylene glycol, or a polyalkylene glycol containing at least 60 weight percent propylene oxide units and not more than 40 weight percent of ethylene oxide units, or an alkyl ether of such a glycol, as an additive for the purpose of improving the scratch resistance of a polymer composition, the composition comprising:
   (A) a polymer matrix derived from at least one monovinylidene aromatic monomer, and optionally at least one comonomer, and optionally
   (B) a rubber; wherein the said additive constitutes from 0.1 to 5 weight percent of the composition.

2. The use of Claim 1 wherein the number average molecular weight of the additive is from 500 to 10,000.

3. The use of Claim 2, wherein the number average molecular weight of the additive is from 1,000 to 5,000.

4. The use as claimed in any one of the preceding Claims wherein the additive is a polypropylene glycol free of ethylene oxide units.

5. The use of any one of Claims 1 to 3, wherein the additive is a polypropylene glycol alkyl ether free of ethylene oxide units.

6. The use of Claim 5, wherein the alkyl ether is a $C_1$-$C_4$ alkyl ether.

7. The use as claimed in any one of Claims 1 to 4, wherein the additive is a polyalkylene glycol containing at least 80 weight percent propylene oxide units and not more than 20 weight percent of ethylene oxide units.

8. The use as claimed in any one of the preceding Claims wherein the monovinylidene aromatic monomer is styrene.

9. The use as claimed in any one of the preceding Claims, wherein acrylonitrile is employed as a comonomer.

10. The use as claimed in any one of the preceding Claims, wherein the composition comprises a mixture of rubbery polymers prepared by emulsion and mass polymerization process.

11. The use as claimed in any one of the preceding Claims, wherein the additive is present in an amount of from 0.2 to 4 weight percent of the composition.

European Patent
Office

**EUROPEAN SEARCH REPORT**

Application Number

EP 93 30 4963

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 235 162 (BASF) 24 January 1975 | 1-3,11 | C08K5/06 C08L25/02 |
| Y | * page 1, line 1 - line 8 * | 1 | |
| Y | * page 1, line 19 - line 27 * * page 2, line 12 - line 16; example 1 * * claim 1 * | 1 | |
| | --- | | |
| A | EP-A-0 018 591 (BASF) | 1-3,7-9, 11 | |
| Y | * page 4, line 13 - page 5, line 14 * | 1 | |
| Y | * page 5, line 15 - page 6, line 4 * * page 12, line 30 - page 13, line 12 * | 1 | |
| | ----- | | |
| | | | TECHNICAL FIELDS SEARCHED (Int. Cl.5) |
| | | | C08K C08L |

The present search report has been drawn up for all claims

| Place of search | Date of completion of the search | Examiner |
|---|---|---|
| THE HAGUE | 05 AUGUST 1993 | ENGEL S.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)